Europäisches Patentamt

**European Patent Office**

Office européen des brevets

(19)

(11) Numéro de publication: **0 320 364 B1**

(12) **FASCICULE DE BREVET EUROPEEN**

(45) Date de publication du fascicule du brevet:
05.09.90

(51) Int. Cl.⁵: **F16D 23/14**

(21) Numéro de dépôt: **88403081.8**

(22) Date de dépôt: **06.12.88**

(54) **Butée de débrayage actionnée par traction.**

(30) Priorité: **08.12.87 FR 8717037**

(43) Date de publication de la demande:
**14.06.89 Bulletin 89/24**

(45) Mention de la délivrance du brevet:
**05.09.90 Bulletin 90/36**

(84) Etats contractants désignés:
**AT DE ES GB IT SE**

(56) Documents cités:
**EP-A- 0 030 165**
**EP-A- 0 192 081**
**FR-A- 2 558 228**
**FR-A- 2 584 756**

(73) Titulaire: **S.N.R. ROULEMENTS, Boîte Postale 17 1, rue des Usines, F-74010 Annecy Cédex(FR)**

(72) Inventeur: **Meyet, Jean-Paul, 10 Bis, Avenue de Chambéry, F-74000 Annecy(FR)**

(74) Mandataire: **Ernst-Schonberg, Michel, R.N.U.R. S. 0804 B.P. 103 8 & 10, avenue Emile-Zola, F-92109 Boulogne Billancourt(FR)**

ACTORUM AG

## Description

L'invention concerne une butée de débrayage actionnée par traction, qui comporte un manchon coulissant, un roulement monté sur ledit manchon qui possède une bague fixe sur laquelle doit être appliquée une force de débrayage par l'intermédiaire d'une fourchette, des corps roulants de transmission de la force de débrayage, une bague tournante de réception de ladite force. L'invention s'applique notamment à une butée portant un moyen de solidarisation de la bague tournante avec un dispositif débrayeur tel q'un diaphragme et un élément élastique de maintien de la liaison axiale entre ledit dispositif et la bague tournante.

Une telle butée décrite par la publication FR-A- 2 558 228 utilisée pour la manoeuvre des embrayages à disque est montée à coulissement sur l'arbre d'entrée de la boîte de vitesses. Un problème que posent ces butées résulte des opérations de montage et de démontage de la boîte de vitesses. Au cours de ces opérations les constituants de la butée sont soumis à des efforts de poussée ou de traction. Lorsque les bagues du roulement sont en tôle emboutie celles-ci subissent alors des contraintes dont l'intensité est susceptible d'endommager le roulement.

Selon l'invention, la bague fixe du roulement est reliée à un support sur lequel prend axialement appui le manchon, ce dernier étant muni d'une surface d'appui axial de ladite bague qui possède de manière en soi connue une capacité omnidirectionnelle de déplacement radial et des extensions axiales débouchant à l'extérieur de ladite surface et susceptible de prendre appui sur la bague tournante.

La butée ainsi réalisée peut recevoir des efforts de basculement ou des efforts axiaux au cours des phases d'assemblage ou de séparation de la butée avec le mécanisme d'embrayage sans préjudice pour le roulement.

D'autres caractéristiques et avantages de l'invention ressortiront de la description qui va suivre d'un exemple de réalisation de la butée, en référence au dessin annexé sur lequel :

- la figure 1 est une vue en coupe axiale d'un montage de la butée de débrayage suivant l'invention suivant la ligne 1-1 de la figure 2,
- la figure 2 est une vue en coupe transversale du montage selon la ligne 2-2 de la figure 1,
- les figures 3 et 4 sont des vues en coupe partielle des détails III-IV de la butée,
- la figure 5 est une vue en coupe partielle de la butée suivant la ligne 5 de la figure 2,
- la figure 6 est une représentation perspective du support du roulement de la butée.

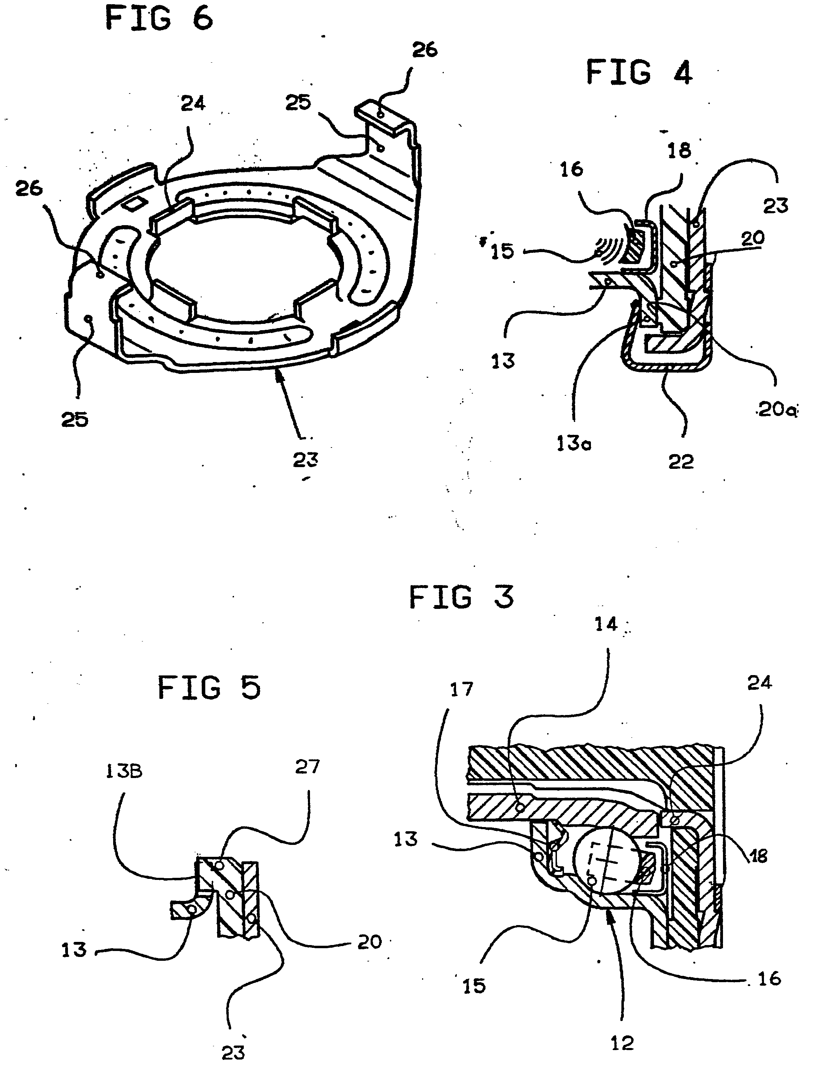

Dans la forme de mise en oeuvre de l'invention, le dispositif débrayeur 1 est de manière connue en soi formé par l'extrémité des doigts radiaux d'un diaphragme. De manière également connue en soi par la publication EP 0164871 pour l'attelage de la butée de débrayage au dispositif débrayeur, nécessaire à une action en traction de cette butée, il est rapporté sur ce dernier, à la faveur de l'ouverture centrale 2 du diaphragme une pièce annulaire 3 portant une bague à ressort 4 à languettes élastiques 5. Un jonc annulaire 6 élastiquement déformable radialement est engageable à des fins de solidarisation de la pièce annulaire 3 avec la butée de débrayage 10 dans une gorge de retenue 11 ménagée pour lui sur un élément de la butée formé par la bague tournante 14 d'un roulement 12. Ainsi que cela est montré à la figure 3, le roulement 12 comporte une bague fixe 13, des corps roulants 15 disposés dans les alvéoles d'une cage 16 et placés entre les bagues 13 et 14. L'étanchéité du roulement 12 est assurée par un joint d'étanchéité 17 et par un déflecteur 18 respectivement solidarisés avec la bague fixe 13.

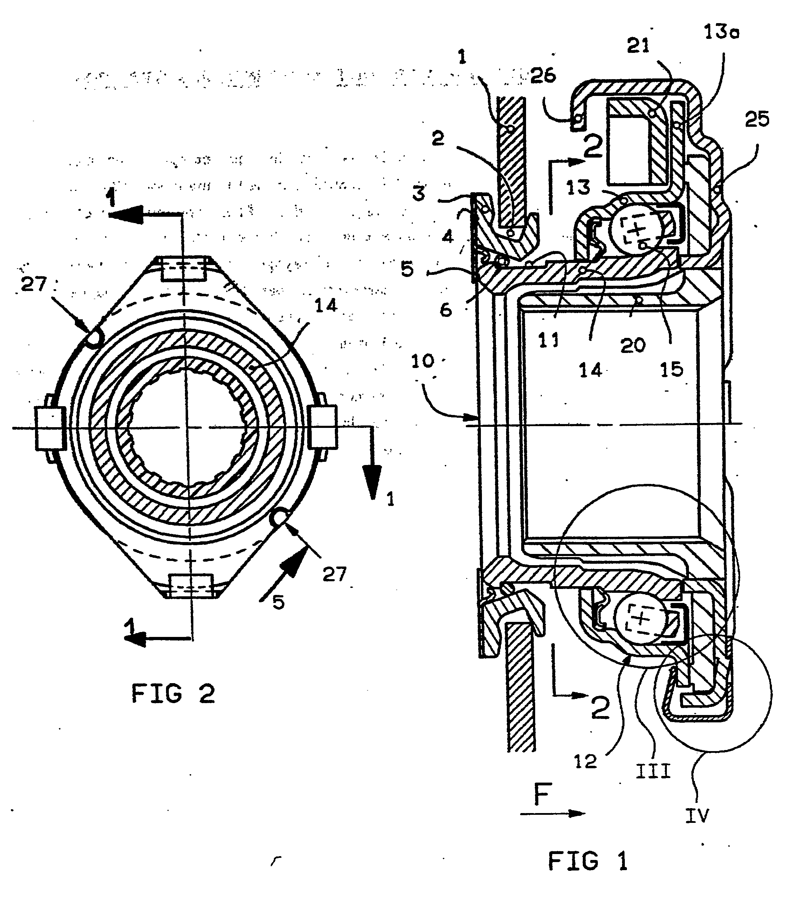

Le roulement 12 est monté sur un manchon 20 coulissant le long d'un guide tel qu'un arbre d'entrée de boîte de vitesses sous l'action d'une fourchette 21. La fourchette 21 applique ainsi que cela est bien connu une force de débrayage suivant le sens de la flèche F de la figure 1 sur une bordure radiale 13a qui s'étend à la périphérie de la bague fixe 13. La bordure 13a constitue par ailleurs l'appui de pinces d'assemblage à ressort 22 dont l'une a été représentée à la figure 4. Dans le but d'assurer au roulement 12 une capacité omnidirectionnelle de déplacement radial par rapport au manchon 20, le diamètre intérieur de la bague tournante 14 est supérieur au diamètre extérieur du manchon 20 et ce dernier porte un flasque 20' portant une surface 20a d'appui axial de la bague fixe 13 qui s'étend radialement le long de la bordure 13a.

Les pinces d'assemblage telles que 22 solidarisent l'ensemble constitué par la bague 13 et par le manchon 20 avec un support 23 sur lequel prend axialement appui le manchon.

Le support 23 montré plus en détail à la figure 6 possède des extensions axiales 24 débouchant à l'extérieur de la surface 20a et respectivement en appui axial sur la bague tournante 14 ou séparée de cette dernière par un faible jeu de montage.

La disposition précitée permet de la sorte de transmettre l'effort axial de montage ou de démontage à la bague 14.

La support 23 porte par ailleurs des griffes 26 de retenue de la fourchette 21 formées à l'extrémité de bras 25 et le bord des griffes s'étend parallèlement au plan d'engagement de la fourchette 21 sur la butée.

Dans le but de limiter l'amplitude du déplacement radial du roulement par rapport au manchon, la bordure 13a d'assemblage de la bague 13 possède deux encoches 13b dont les bords encadrent des butées constituées par des tétons 27 portés par la bordure du flasque d'assemblage 20' du manchon 20. Les tétons 27 sont séparés des bords des encoches respectives par un jeu variable correspondant à la capacité omnidirectionnelle de déplacement du roulement.

## Revendications

1/ Butée de débrayage actionnée par traction qui comporte un manchon (20) coulissant, un roulement (12) monté sur ledit manchon (20) qui possède une bague fixe (13) sur laquelle doit être appliquée une force de débrayage par l'intermédiaire d'une fourchette (21), des corps roulants (15) de transmission de la force de débrayage, une bague tournante (14) de réception de ladite force, caractérisée par le fait que la bague fixe (13) est reliée à un support (23) sur lequel prend axialement appui le manchon (20), ce dernier étant muni d'une surface (20a) d'appui axial de ladite bague fixe (13) qui possède de manière en soi connue une capacité omnidirectionnelle de déplacement radial tandis que des extensions (24) axiales du support (23) débouchent à l'extérieur de ladite surface (20a) pour prendre appui sur la bague tournante (14).

2/ Butée de débrayage selon la revendication 1, caractérisée par le fait que le support (23) porte des moyens de retenue (26) unidirectionnel de la fourchette (21) constitués par des bras pliés (25) dont le bord s'étend parallèlement au plan d'engagement de ladite fourchette (21).

3/ Butée de débrayage selon l'une quelconque des revendications 1 ou 2, caractérisée par le fait que le support (23) et un bord périphérique de la bague fixe (13) du roulement sont solidarisés au moyen d'agrafes (22) qui exercent un effort de pincement axial sur un flasque (20') radial du manchon (20) porteur de la surface d'appui (20a) axial de ladite bague fixe (13).

**Patentansprüche**

1. Gezogenes Kupplungsausrücklager, mit einer gleitenden Muffe (20), einem auf der Muffe (20) angeordneten Lager (12), das einen feststehenden Ring (13) trägt, an dem eine Kupplungskraft mittels einer Gabel (21) angreifen kann, Rollkörpern (15) zur Übertragung der Kupplungskraft und einem drehbaren Ring (14) zur Aufnahme dieser Kraft, dadurch gekennzeichnet, daß der feststehende Ring (13) mit einer Halterung (23) verbunden ist, auf der sich die Muffe (20) axial abstützt, wobei letztere mit einer axialen Stützfläche (20a) für den feststehenden Ring (13) versehen ist, welche in an sich bekannter Weise die Möglichkeit einer Radialverschiebung in mehreren Richtungen bietet, während axiale Verlängerungen (24) der Halterung (23) sich bis außerhalb der Fläche (20a) erstrecken, um sich auf dem drehbaren Ring (14) abzustützen.

2. Kupplungsausrücklager nach Anspruch 1, dadurch gekennzeichnet, daß die Halterung (23) eine sich in einer Richtung erstreckende Halteanordnung (26) für die Gabel (21) aufweist, die aus gebogenen Armen (25) besteht und deren Rand sich parallel zur Eingriffsebene der Gabel (21) erstreckt.

3. Kupplungsausrücklager nach einem der Ansprüche 1 oder 2, dadurch gekennzeichnet, daß die Halterung (23) und ein Umfangsrand des feststehenden Ringes (13) des Lagers mittels einer Klemmvorrichtung (22) miteinander verbunden sind, welche einen axialen Klemmeffekt auf einen radialen Flansch (20') der Muffe (20) ausübt, welche die axiale Stützfläche (20a) für den feststehenden Ring (13) trägt.

**Claims**

1. A clutch release bearing which is actuated by a pulling force, comprising a sliding sleeve (20), a rolling bearing (12) mounted on said sleeve (20) which has a fixed race (13) against which a clutch release force is to be applied by way of a fork (21), rolling members (15) for transmission of the clutch release force, and a rotating race (14) for receiving said force, characterised in that the fixed race (13) is connected to a support (23) against which the sleeve (20) axially bears, the sleeve being provided with a surface (20a) for the fixed race (13) to bear axially thereagainst, the fixed race having in per se known manner an omnidirectional capacity for radial displacement while axial extensions (24) of the support (23) extend to the outside of said surface (20a) to bear against the rotating race (14).

2. A clutch release bearing according to claim 1 characterised in that the support (23) comprises means (26) for unidirectional retention of the fork (21), said means being formed by bent arms (25), the edges of which extend parallel to the plane of engagement of said fork (21).

3. A clutch release bearing according to either one of claims 1 and 2 characterised in that the support (23) and a peripheral edge of the fixed race (13) of the rolling bearing are fixed by means of clips (22) which apply an axial clipping force to a radial flange (20') of the sleeve (20) which carries the axial bearing surface (20a) for said fixed race (13).

FIG 2

FIG 1

FIG 6

FIG 4

FIG 3

FIG 5